(19) Europäisches Patentamt
European Patent Office
Office européen des brevets

(11) **EP 1 936 366 B1**

(12) **EUROPÄISCHE PATENTSCHRIFT**

(45) Veröffentlichungstag und Bekanntmachung des Hinweises auf die Patenterteilung:
**09.02.2011  Patentblatt 2011/06**

(51) Int Cl.:
***G01N 27/416*** *(2006.01)*

(21) Anmeldenummer: **06127182.1**

(22) Anmeldetag: **22.12.2006**

(54) **Verfahren und Vorrichtung zur Überwachung einer elektrochemischen Halbzelle**

Method and apparatus for monitoring an electrochemical half-cell

Procédé et appareil destiné à la surveillance d'une demi-cellule électrochimique

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**25.06.2008  Patentblatt 2008/26**

(73) Patentinhaber: **Mettler-Toledo AG**
**8606 Greifensee (CH)**

(72) Erfinder: **Ehrismann, Philippe**
**8610, Uster (CH)**

(56) Entgegenhaltungen:
**EP-A- 0 156 376         EP-A- 1 176 419**
**EP-A- 1 219 958         EP-A- 1 643 242**
**DE-A1- 19 539 763       US-A- 4 822 456**
**US-A1- 2005 040 038**

EP 1 936 366 B1

**Beschreibung**

Die Erfindung betrifft ein Verfahren zur Überwachung einer elektrochemischen Halbzelle zweiter Ordnung sowie eine Messsonde mit mindestens einer elektrochemischen Halbzelle zweiter Ordnung.

Es sind zahlreiche Arten von elektrochemischen Messsystemen oder auch Messsonden bekannt, welche mindestens eine elektrochemische Halbzelle zweiter Ordnung aufweisen, beispielsweise ionensensitive, potentiometrische oder Redox-Messsonden. Derartige Messsonden werden alltäglich in analytischen Laboratorien und Prozessanlagen für elektrochemische Messungen eingesetzt.

Eine elektrochemische Halbzelle zweiter Art weist ein metallisches Ableitelement auf, welches in einem Elektrolyten angeordnet ist, der eine gesättigte Lösung eines schwerlöslichen Salzes des Metalls des Ableitelements aufweist. Vorzugsweise ist das Ableitelement mit einem Überzug eines schwerlöslichen Salzes desselben Metalls aus dem auch das Ableitelement besteht überzogen, wobei das im Überzug enthaltene Salz und das im Elektrolyten gelöste Salz in der Regel dasselbe Anion aufweisen. Das Potential des Ableitelements, d. h. die elektromotorische Kraft E, einer solchen Halbzelle ist bekanntlich durch die Nernst-Beziehung gegeben,

$$E = E^\circ - \frac{RT}{zF} \cdot \ln a \qquad\qquad [1]$$

wobei E˚ das Standardelektrodenpotential, R die allgemeine Gaskonstante, T die absolute Temperatur, z die Wertigkeit des potentialbestimmenden Ions bzw. die Wertigkeitsänderung im Falle einer Redox-Reaktion, F die Faraday-Konstante und a die Aktivität des potentialbestimmenden Ions ist.

Bekannte Halbzellen beruhen beispielsweise auf den Systemen Silber/Silberchlorid (Ag/AgCl), Kalomel (Hg/Hg$_2$Cl$_2$), Quecksilbersulfat (Hg/HgSO$_4$) oder Thalamid (Hg(Tl)/TlCl). Potentialbestimmend ist an sich das Redoxsystem Metall/Metallion, wobei aber bei den elektrochemischen Halbzellen zweiter Art die betreffende Metallionenaktivität über das Löslichkeitsprodukt des schwerlöslichen Metallsalzes indirekt durch die Aktivität dessen Anions bestimmt ist.

Häufig bestehen Messelektroden aus mindestens einer Referenzhalbzelle und mindestens einer Messhalbzelle, welche beispielsweise im Falle einer herkömmlichen pH-Elektrode auch als Glashalbzelle bezeichnet wird. Der zwischen zwei Halbzellen auftretende Potentialunterschied kann als Spannung gemessen werden. Diese gemessene Spannung stellt dann ein Mass für die Ionenaktivität bzw. deren Konzentration dar. Insbesondere für Referenzhalbzellen bzw. für Bezugselektroden sind bereits verschiedene Verfahren zur Überwachung bekannt.

Die EP 1 643 242 A1 offenbart eine Bezugselektrode für potentiometrische Messungen mit einem flüssigen Elektrolyten sowie ein Verfahren zur Überwachung des Füllstands des Elektrolyten mittels Widerstandsmessungen zwischen mehreren Ableitelementen von denen mindestens eines nicht in den Elektrolyten eintaucht.

Die US 2005/0040038 A1 offenbart eine Bezugselektrode mit zwei getrennten Kammern, welche jeweils mit dem Bezugselektrolyten gefüllt sind, in welche jeweils ein Ableitelement eintaucht. Da nur eine Kammer über eine so genannte liquid junction, zum Beispiel ein Diaphragma, mit dem Messmedium in Kontakt steht, können Veränderungen der mit dem Messmedium in Kontakt stehenden Kammer durch eine Vergleichsmessung mit der anderen Kammer festgestellt werden.

Die EP 1 176 419 A2 offenbart ein Verfahren zur Überwachung der Alterung einer potentiometrischen Messsonde, wobei ein sekundäres Ableitelement näher am ins Messmedium eintauchenden Ende der Messsonde angeordnet ist, als ein primäres Ableitelement, wodurch eine Verarmung des Elektrolyten zunächst die Messdaten des sekundären Ableitelements beeinflusst und so einen Hinweis auf die fortschreitende Verarmung darstellt. Weiterhin wird in der DE 101 00 239 A1 ein Verfahren zur Bestimmung der Restlebensdauer einer potentiometrischen Messsonde offenbart, wobei ein sekundäres Ableitelement näher am ins Messmedium eintauchenden Ende der Messsonde angeordnet ist, als ein primäres Ableitelement, und anhand des Potentialunterschieds zwischen den Ableitelementen sowie der bereits verflossenen Grundbetriebsdauer die Restbetriebsdauer der Messsonde ermittelt wird.

Die bereits bekannten Verfahren sind vor allem auf die Überwachung der Eigenschaften des Elektrolyten ausgerichtet und basieren auf der Annahme, dass die Ableitelemente ständig einwandfrei funktionieren. Dieses kann jedoch insbesondere für Halbzellen zweiter Ordnung, welche Temperaturschwankungen ausgesetzt sind, nicht einfach vorausgesetzt werden.

Ein bekannter Nachteil der elektrochemischen Halbzelle zweiter Ordnung liegt in der erheblichen, uneinheitlichen und teilweise unstetigen Temperaturabhängigkeit des Potentials E des Ableitelements. Die Ursache für die wenig überschaubare Temperaturabhängigkeit derartiger Halbzellen liegt vor allem in der generell starken Temperaturabhängigkeit von Löslichkeitsprodukten schwer löslicher Verbindungen, die eine Temperaturabhängigkeit des Halbzellenpotentials E bewirkt. Zusätzlich erschwerend wirkt sich die Verwendung von gesättigten Salzlösungen mit dem potentialbestimmenden Anion, beispielsweise gesättigte Lösungen von Kaliumchlorid oder Kaliumsulfat als Elektrolyt, aus. Da die Löslichkeiten dieser Salze ebenfalls eine ausgeprägte Temperaturabhängigkeit zeigen, überlagern sich beide Effekte zu einem höchst unerwünschten unstetigen Temperaturverhalten der Halbzelle. Zusätzlich kommt hinzu, dass die Nernst-Steigung, d. h. der Faktor vor dem logarithmischen Term in Gleichung [1], ebenfalls von der Temperatur abhängt. Aus diesem Grund gelingt es beispielsweise nie, wenn eine Bezugselektrode mit einer derartigen Halbzelle verwendet wird, beim Aufbau einer Messkette mit einer zweiten Mess- oder Indikatorhalbzelle einen exakt definierten Isothermenschnittpunkt zu erhalten, wie er beispielsweise für eine Temperaturkorrektur nach DIN 19265 benötigt würde.

Neben der erwähnten Temperaturabhängigkeit treten bei vielen Messsonden mit Halbzellen zweiter Ordnung noch zwei weitere, gravierende Nachteile auf. So kann es bei Temperaturwechseln vorkommen, dass sich aufgrund einer Temperaturerhöhung Teile des den Überzug bildenden Salzes im Elektrolyten lösen und während einer anschliessenden Temperatursenkung aus dem Elektrolyten ausfallen. Dieses äussert sich zunächst in einem ausgeprägten Hystereseverhalten, d. h. in einer Potentialabweichung bei Rückkehr zur tieferen Ausgangstemperatur.

Da zudem bei allen oben erwähnten Bezugshalbelementen die eigentliche Messionenaktivität über das Löslichkeitsprodukt eines schwerlöslichen Salzes eingestellt wird und bei derartigen heterogenen Gleichgewichten zwischen Lösung und Feststoff gewisse kinetische Hemmnisse vorliegen, die sich als Übersättigungseffekt darstellen, tritt bei diesen Bezugselektroden die Potentialeinstellung nach einem Temperaturwechsel erst mit einer gewissen Zeitverzögerung ein. Dies führt zu einem schleppenden Ansprechverhalten bei potentiometrischen Messungen, was den industriellen Einsatz stark beeinträchtigen kann.

Häufige Temperaturwechsel können sogar zu einem vollständigen Abbau bzw. Ablösung des Metallsalzüberzugs vom metallischen Ableitelement führen, wodurch sich das Ansprechverhalten der Halbzelle verschlechtert und/oder die Halbzelle sogar irreversibel zerstört werden kann.

Bei Messsonden, welche in einer Prozessanlage eingebaut sind, wäre es wünschenswert die Funktionsfähigkeit einzelner Messsonden und insbesondere die Funktionsfähigkeit deren Halbzellen überwachen zu können, um defekte Messsonden schnell, einfach und sicher identifizieren und rechtzeitig ersetzen zu können.

Die Aufgabe der Erfindung liegt daher in der Entwicklung eines Verfahrens zur Überwachung einer elektrochemischen Halbzelle zweiter Ordnung, insbesondere der Funktionsfähigkeit des Ableitelements, sowie in der Bereitstellung einer geeigneten Messsonde.

Diese Aufgabe wird von einem Verfahren zur Überwachung einer elektrochemischen Halbzelle zweiter Ordnung gelöst. Die Halbzelle wirkt mit einer Steuer- und/oder Regeleinheit zur Schliessung eines elektrochemischen Kontakts zwischen der Halbzelle und einem Messmedium, sowie mindestens einem Temperatursensor zusammen und weist einen Elektrolyten und ein mit dem Elektrolyten in Kontakt stehendes erstes Ableitelement mit einem ersten Potential, genauer einem Halbzellenpotential, auf. Ferner weist die Halbzelle ein mit dem Elektrolyten in Kontakt stehendes zweites Ableitelement mit einem zweiten Potential, genauer einem Halbzellenpotential, auf. Die beiden Ableitelemente bestehen im Wesentlichen aus einem Metall. Ferner weist das erste Ableitelement einen Überzug aus einem schwerlöslichen Salz desselben Metalls auf. Dieser Überzug bedeckt das Ableitelement zumindest teilweise. Das Verfahren zur Überwachung einer elektrochemischen Zelle umfasst mehrere Schritte:

a. Erfassen eines Temperatur-Zeit-Profils mittels des Temperatursensors;

b. Ermitteln eines ersten Kontrollwerts, welcher im Zusammenhang mit dem Temperatur-Zeit-Profil an einem Zeitpunkt steht;

c. Vergleichen des ersten Kontrollwerts mit einem ersten Grenzwert;

d. Ermitteln eines zweiten Kontrollwerts, welcher einen mathematischen Zusammenhang zwischen dem ersten Potential und dem zweiten Potential zu dem Zeitpunkt herstellt, wenn der erste Grenzwert erreicht und/oder überschritten wird;

e. Vergleich des zweiten Kontrollwerts mit einem zweiten Grenzwert und

f. Erzeugen eines Signals bei Erreichen und/oder Unterschreiten des zweiten Grenzwerts.

Mittels dieses Verfahrens, kann der Zeitpunkt und/oder das Zeitfenster ermittelt werden zu dem bzw. in dem während der Verwendung einer Halbzelle Temperaturwechsel auftreten, welche ausreichen, um unterschiedliche Aktivitäten des im Elektrolyten gelösten Metallions zwischen dem ersten und dem zweiten Ableitelement zu detektieren. Starke und insbesondere schnelle Temperaturwechsel können eine partielle und/oder vollständige Ablösung des Metallsalz-Überzugs des Ableitelements auslösen. Ein in Relation setzen der Potential-Zeit-Profile der beiden Ableitelemente zu diesem Zeitpunkt bzw. in diesem Zeitfenster ermöglicht eine Abschätzung des Beschichtungsgrades des ersten Ableitelements und damit eine Abschätzung dessen Funktionsfähigkeit.

Erreicht und/oder unterschreitet der zweite Kontrollwert, welcher ein Mass für den Potentialunterschied zwischen den beiden Ableitelementen darstellt, einen vorgegebenen zweiten Grenzwert, so kann daraus abgeleitet werden, dass das erste Ableitelement ungenügend beschichtet ist und zumindest eine partielle Ablösung des Metallsalz-Überzugs stattgefunden hat. Weisen beide Ableitelemente nahezu dasselbe Potential auf, so hat eine vollständige Ablösung des Metallsalz-Überzugs stattgefunden. Der Begriff Potential des Ableitelements wird hier in der Regel synonym mit dem Begriff Halbzellenpotential verwendet.

Beim Erreichen und/oder Unterschreiten des zweiten Grenzwerts erzeugt die Steuer- und/oder Regeleinheit ein Signal, welches dem Anwender akustisch, optisch und/oder elektronisch angezeigt wird und diesen auf die eingeschränkte oder die fehlende Funktionsfähigkeit der Halbzelle aufmerksam macht. Das Signal kann beispielsweise elektronisch über einen Messumformer, auch Transmitter genannt, gegebenenfalls einen Koppler und einen gemeinsamen Datenbus einem Prozess- und/oder Leitrechner zur Weiterverarbeitung zugeführt werden.

Je nach Einsatzgebiet der Halbzelle, kann die Temperatur als Temperatur-Zeit-Profil kontinuierlich oder in regelmässigen und/oder unregelmässigen Zeitintervallen erfasst werden.

Zur Ermittlung des ersten Kontrollwerts werden die ermittelten Temperaturwerten und die Messzeitpunkten in einen mathematischen Zusammenhang gebracht und ein von der Temperatur und der Zeit abhängiger Wert und/oder eine Funktion ermittelt. Vorzugsweise wird die erste Ableitung der Temperatur nach der Zeit oder der Temperaturunterschied über ein vorgegebenes Zeitintervall als Kontrollwert verwendet, wobei selbstverständlich auch weitere von der Temperatur und der Zeit abhängige Funktionen zur Ermittlung des ersten Kontrollwerts herangezogen werden können. Der erste Kontrollwert repräsentiert insbesondere schnelle Temperaturwechsel, wie sie prozessbedingt in der Halbzelle auftreten können.

Die Ermittlung des zweiten Kontrollwerts kann beispielsweise die Erfassung einer zwischen dem ersten Ableitelement und einer weiteren Halbzelle aufgrund eines Potentialunterschieds auftretenden ersten Spannung und die Erfassung einer zwischen dem zweiten Ableitelement und der weiteren Halbzelle aufgrund eines Potentialunterschieds auftretenden zweiten Spannung umfassen. Der zweite Kontrollwert oder eine zweite Kontrollfunktion werden in Abhängigkeit der beiden Spannungen ermittelt, beispielsweise als Spannungsdifferenz.

Alternativ kann die Ermittlung des zweite Kontrollwerts die Erfassung einer zwischen dem ersten und zweiten Ableitelement auftretenden weiteren Spannung umfassen, welche messbar ist solange das erste Ableitelement ausreichend beschichtet ist und ein Potentialunterschied zwischen den Ableitelementen existiert. Dieser Schritt ist vorteilhaft, da so das erste und zweite Potential direkt miteinander in Verbindung gesetzt werden, ohne durch den pH-Wert oder eine andere Eigenschaft des Messmediums beeinflusst zu werden.

Wird ein kontinuierliches Temperatur-Zeit-Profil ermittelt, so bietet es sich an, eine von der Temperatur und der Zeit abhängige erste Kontrollfunktion anstelle einzelner erster Kontrollwerte zu ermitteln.

Ebenso wie das Temperatur-Zeit-Profil können auch das erste Potential und/oder das zweite Potential als Potential-Zeit-Profile kontinuierlich oder in regelmässigen und/oder unregelmässigen Zeitintervallen erfasst werden.

Das Verfahren zur Überwachung der Halbzelle, insbesondere die Schritte b bis f können sowohl in vorgegebenen Zeitintervallen oder kontinuierlich wiederholt werden.

Der erste Kontrollwert kann als diskreter Wert eines zeitabhängigen Kontrollprofils oder einer Kontrollfunktion an mindestens einem vorgegebenen Zeitpunkt ermittelt werden, wobei der erste Kontrollwert vorzugsweise in regelmässigen Zeitabständen, insbesondere vor dem Prozess- bzw. Reaktionsstart, ermittelt werden sollte.

Es bietet sich an, ein derartiges Verfahren zur Überwachung einer elektrochemischen Halbzelle zweiter Ordnung als Programm in eine Steuer- und/oder Regeleinheit einer Messsonde zu integrieren. Die Messsonde weist neben der Steuer- und/oder Regeleinheit zur Schliessung eines elektrochemischen Kontakts zwischen der Halbzelle und einem Messmedium mindestens einen Temperatursensor und mindestens eine elektrochemische Halbzelle zweiter Ordnung auf. Die Halbzelle weist einen Elektrolyten und ein mit dem Elektrolyten in Kontakt stehendes erstes Ableitelement mit einem ersten Potential auf. Ferner weist die Halbzelle ein mit dem Elektrolyten in Kontakt stehendes zweites Ableitelement mit einem zweiten Potential auf. Beide Ableitelemente weisen im Wesentlichen dasselbe Metall auf. Das erste Ableitelement weist ferner einen Überzug aus einem schwerlöslichen Salz desselben Metalls aus. Dieser Überzug bedeckt das erste Ableitelement zumindest teilweise.

Die Ableitelemente können als Metall beispielsweise Silber, Quecksilber, Thallium, Blei oder eine Legierung dieser Metalle aufweisen. Das erste Ableitelement ist mit einem schwerlöslichen Metallsalz desselben Metalls und/oder derselben Metalllegierung beschichtet, wobei dieses vorzugsweise ein Metallchalkogenid, Metallhalogenid oder Metallsulfat und insbesondere ein Metallchlorid, -sulfid, -bromid oder -sulfat ist. Das Merkmal "schwerlöslich" bezieht sich vor allem auf die Löslichkeit des Metallsalzes in dem verwendeten Lösungsmittel des Elektrolyten.

Als Elektrolyt können sowohl flüssige als auch verfestigte Elektrolyte eingesetzt werden. Bekannte Elektrolyte weisen beispielsweise lösliche Metallsalze mit demselben Anion wie der Überzug auf, wie Kaliumchlorid, Natriumchlorid, Magnesiumchlorid, Natriumsulfat, Kaliumsulfat. Weiterhin sind Polymerelektrolyte auf Acrylamid-Acrylat-Basis bekannt. Prinzipiell können alle für elektrochemische Halbzellen zweiter Ordnung bekannten Elektrolyte eingesetzt werden.

Derartige Messsonden können beispielsweise als ionensensitive, potentiometrische oder Redox-Messsonden und insbesondere als pH-Messsonden ausgestaltet sein.

Das beschriebene Verfahren kann prinzipiell mit allen Messsonden durchgeführt werden, welche eine Halbzelle zweiter Ordnung aufweisen und für die ein stabiles Potential bei schnellen Temperaturwechseln wichtig ist.

Fig. 1    Schematische Darstellung einer elektrochemischen Halbzelle zweiter Ordnung mit einem ersten und einem zweiten Ableitelement;

Fig. 2    Darstellung eines Verfahrens zur Funktionskontrolle einer elektrochemischen Halbzelle zweiter Ordnung in Form eines Flussdiagramms;

Fig. 3    schematische Darstellung einer pH-Messsonde mit einer elektrochemischen Halbzelle zweiter Ordnung mit einem ersten und einem zweiten Ableitelement und einer Referenzhalbzelle.

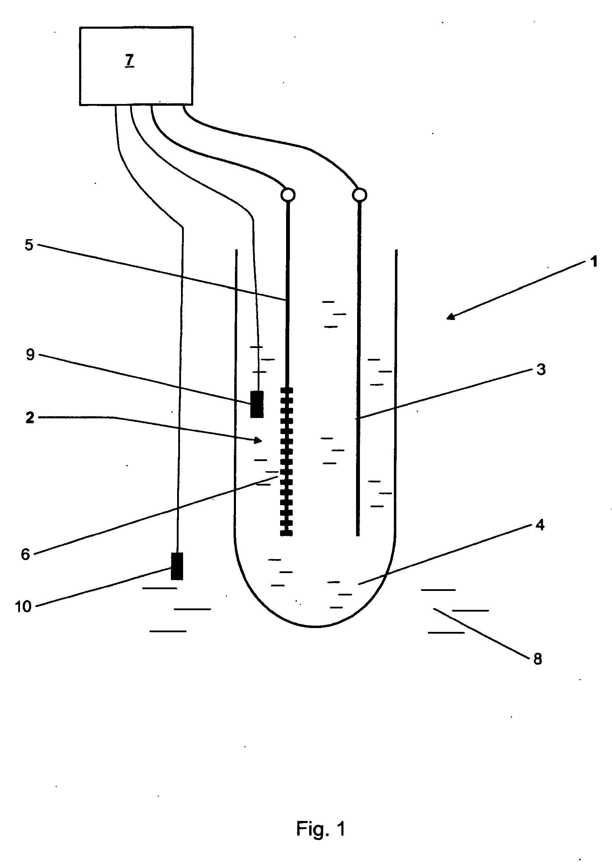

In Figur 1 ist eine elektrochemische Halbzelle zweiter Ordnung 1 mit einem ersten Ableitelement 2 und einem zweiten Ableitelement 3 schematisch dargestellt. Beide Ableitelemente 2,3 tauchen in einen Elektrolyten 4 ein. Das erste Ableitelement 2 besteht aus einem Metalldraht 5, welcher zumindest teilweise einen Überzug 6 aus einem schwerlöslichen Metallsalz aufweist. Das zweite Ableitelement 3 besteht aus demselben Metall und ist unbeschichtet. Als Metall / Metallsalz können beispielsweise Ag/AgCl, $Hg/Hg_2Cl_2$, Hg(Tl)/TlCl oder weitere bekannte Systeme für elektrochemische Halbzellen eingesetzt werden.

Die Ableitelemente 2, 3 sind mit einer Steuer- und/oder Regeleinheit 7 verbunden, wie es hier angedeutet wird, welche unter anderem zur Schliessung eines elektrochemischen Kontakts zwischen der Halbzelle 1 und einem Messmedium 8 mit dem die Halbzelle 1 in Kontakt steht ausgebildet ist.

Die Steuer- und/oder Regeleinheit 7 ist hier beispielhaft als Computer oder Mikrocomputer ausgestaltet. Im Fall, dass die Halbzelle 1 Bestandteil einer Messsonde ist, kann die Steuer- und/oder Regeleinheit 7 entweder direkt in die Messsonde, zum Beispiel als Transmitter, integriert werden oder als externe Einheit ausgestaltet sein.

Weiterhin dient die Steuer- und/oder Regeleinheit 7 zur Erfassung der Temperatur der Halbzelle 1. Diese Temperatur kann entweder durch einen direkt in der Halbzelle angeordneten Temperatursensor 9 und/oder durch einen im Messmedium 8 angeordneten Temperatursensor 10 gemessen werden.

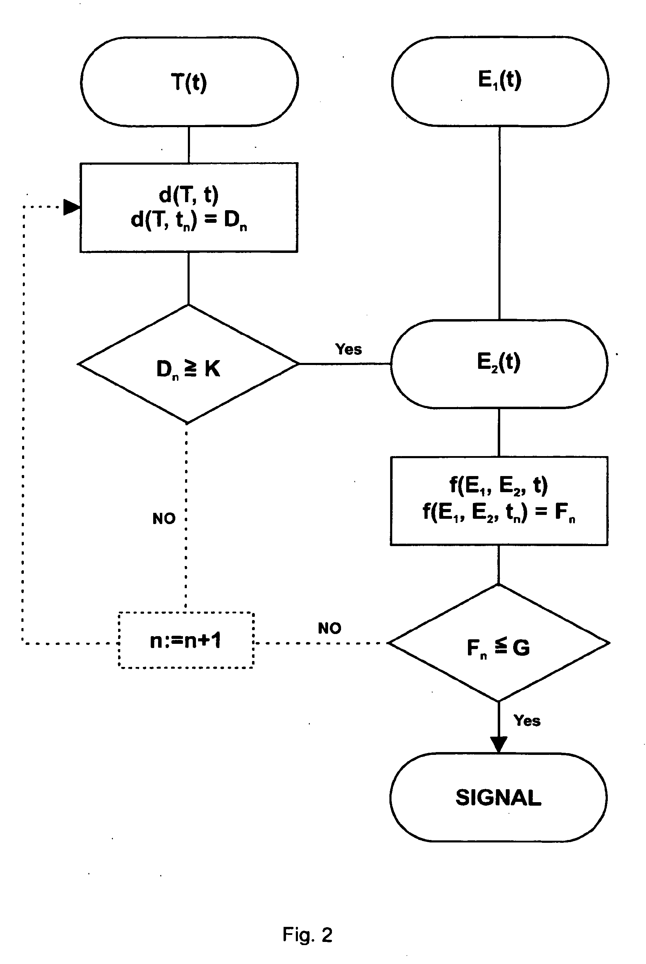

In Figur 2 ist ein Verfahren zur Überwachung einer Halbzelle zweiter Ordnung, wie sie in Figur 1 gezeigt ist, schematisch dargestellt. Dieses Verfahren wird vorzugsweise als Programm und/oder Programmteil eines Betriebsprogramms der Halbzelle direkt in der Steuer- und/oder Regeleinheit integriert. Weiterhin ist es möglich, dass die Messdaten der Halbzelle an eine zentrale Einheit weitergeleitet werden und das Verfahren zur Überwachung dort implementiert ist.

Als Messdaten werden sowohl die Temperatur T(t) des in der Halbzelle angeordneten Elektrolyten und/oder die des Messmediums als auch das Potential $E_1$(t) des ersten Ableitelements als Funktion der Zeit ermittelt oder bestimmt. Diese Daten werden bevorzugt kontinuierlich ermittelt, wobei auch die Ermittlung diskreter Messdaten möglich ist.

Anhand des ermittelten Temperatur-Zeit-Profils T(t) wird zunächst eine erste Kontrollfunktion d(T,t) ermittelt, welche zumindest von der Temperatur und der Zeit abhängt und im einfachsten Fall die Ableitung T der Temperatur nach der Zeit ist. Die erste Kontrollfunktion d(T,t) kann selbstverständliche eine beliebige andere mathematische Funktion, welche von Zeit und der Temperatur abhängig ist, sein. Die Wahl der Funktion hängt vor allem vom Einsatzgebiet der Halbzelle bzw. der Art der Messsonde mit einer Halbzelle ab.

Zu vorbestimmten Zeitpunkten $t_n$ oder auch kontinuierlich, wird mittels der ersten Kontrollfunktion d(T,t) ein erster Kontrollwert $D_n = d(T, t_n)$ berechnet. Dieser erste Kontrollwert $D_n$ wird anschliessend mit einem ersten Grenzwert K verglichen.

Der erste Grenzwert K stellt ein Mass für die Temperaturwechsel im Zeitintervall dar, welchen die Halbzelle ausgesetzt ist und welche für das Voranschreiten des Ablösungsprozesses und der Zersetzung des Metallsalzüberzugs vom ersten Ableitelement entscheidend sind.

Solange der erste Kontrollwert $D_n$ kleiner als der erste Grenzwert K ist, wird der Zähler n für das Zeitintervall $t_n$ nur um eins erhöht und zum nächsten Zeitpunkt $t_{n+1}$ ein neuer erster Kontrollwert $D_{n+1}$ ermittelt.

Wenn der erste Kontrollwert $D_n$ den ersten Grenzwert K erreicht oder überschreitet $D_n \geq K$, dann wird ein zweiter Kontrollwert $F_n$ bzw. eine zweite Kontrollfunktion $f(E_1, E_2, t)$ ermittelt, welcher einen Zusammenhang zwischen dem ersten Potential $E_1$ des ersten Ableitelements und dem zweiten Potential $E_2$ des zweiten Ableitelements zum selben Zeitpunkt $t_n$ herstellt.

Zum Zeitpunkt $t_n$, an dem der erste Kontrollwert $D_n$ grösser oder gleich dem ersten Kontrollwert $D_n \geq K$ ist, wird mittels der zweiten Kontrollfunktion $f(E_1, E_2, t)$ ein zweiter Kontrollwert $F_n = f(E_1, E_2, t_n)$ ermittelt und mit einem zweiten Grenzwert G verglichen.

Der zweite Kontrollwert $F_n$ stellt ein Mass dafür dar, wie weit die Degradation oder Ablösung des Überzugs des ersten Ableitelements vorangeschritten ist.

Der Zusammenhang $f(E_1, E_2, t)$ zwischen den Potentialen $E_1$, $E_2$ des ersten und des zweiten Ableitelements und der Zeit kann direkt bestimmt werden, indem eine zwischen den beiden Ableitelementen auftretende Spannung $U_{1,2}(t)$ als Funktion der Zeit erfasst wird. Die Spannung $U_{1,2}(t)$ ist ein direktes Mass für den Potentialunterschied zwischen den beiden Ableitelementen und wird direkt als Kontrollwert $F_n = f(E_1, E_2, t_n) = U_{1,2}(t_n)$ herangezogen.

Weiterhin ist es möglich die Spannungen $U_1(t)$, $U_2(t)$ als Funktion der Zeit zu erfassen, welche zwischen dem ersten Ableitelement und einer weiteren Halbzelle sowie zwischen dem zweiten Ableitelement und der weiteren Halbzelle auftreten. Diese Spannungen $U_1(t)$, $U_2(t)$ hängen von den Potentialen $E_1$, $E_2$ des ersten respektive des zweiten Ableitelement ab. Der Kontrollwert $F_n$ und/oder die Kontrollfunktion $f(E_1, E_2, t)$, welche von den beiden Potentialen $E_1$, $E_2$ sowie der Zeit t abhängig sind, kann beispielsweise durch Differenzbildung der erfassten Spannungen $U_1$, $U_2$, ermittelt werden. Der Kontrollwert $F_n = f(E_1, E_2, t_n)$ stellt den Wert der Kontrollfunktion $f(E_1, E_2, t)$ an einem bestimmten Zeitpunkt $t_n$ dar.

Solange der zweite Kontrollwert $F_n$ grösser ist als der Grenzwert G, ist anzunehmen, dass das erste Ableitelement ausreichend beschichtet ist.

Erreicht der zweite Kontrollwert $F_n$ jedoch den Grenzwert G oder unterschreitet ihn sogar, so ist die Beschichtung des ersten Ableitelements nicht mehr ausreichend, da zu viel Metallsalz des Überzugs in Lösung gegangen und/oder ausgefallen ist. In diesem Fall erzeugt die Steuer- und/oder Regeleinheit ein Signal, welches dem Benutzer anzeigt, dass die Halbzelle bzw. eine diese aufweisende Messsonde nur noch eingeschränkt funktionsfähig oder bereits funktionsunfähig ist und demnächst ersetzt werden sollte.

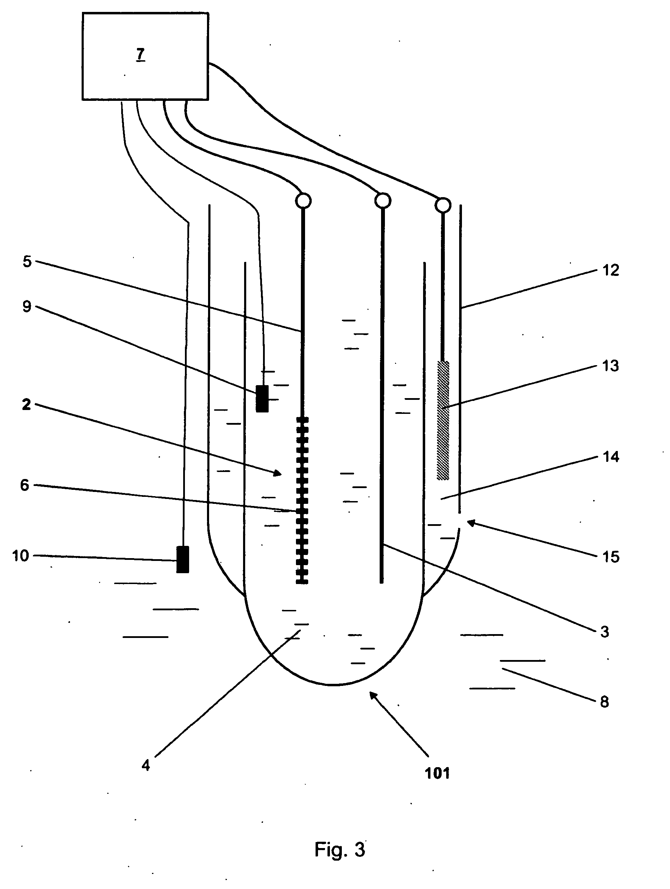

Eine erfindungsgemässe Halbzelle kann beispielsweise als Messhalbzelle 101 in einer pH-Messsonde, wie sie schematisch in Figur 3 gezeigt ist, verwendet werden. Gleiche Elemente sind mit denselben Referenznummern versehen.

Die Messhalbzelle 101 ist von einer Referenzhalbzelle 12 umgeben, welche über eine sogenannte liquid junction 15 mit einem Messmedium 8 in Kontakt steht. In der Referenzhalbzelle ist ein drittes metallisches Ableitelement 13 angeordnet. Das dritte Ableitelement 13, kann ein beliebiges für pH-Messungen geeignetes Ableitelement sein. Die Referenzhalbzelle 12 ist mit einem zweiten Elektrolyten 14 gefüllt. Für die Funktionsweise von elektrochemischen pH-Messsonden sei auf die bekannte Fachliteratur verwiesen.

Bezugszeichenliste

| | |
|---|---|
| 1, 101 | Halbzelle zweiter Ordnung / Messhalbzelle |
| 2 | erstes Ableitelement |
| 3 | zweites Ableitelement |
| 4 | Elektrolyt |
| 5 | Metalldraht |
| 6 | Metallsalzüberzug |
| 7 | Steuer- und/oder Regeleinheit |
| 8 | Messmedium |
| 9 | Temperatursensor |
| 10 | Temperatursensor |
| 12 | Bezugshalbzelle |
| 13 | drittes Ableitelement |
| 14 | Bezugselektrolyt |
| 15 | liquid junction |

**Patentansprüche**

1. Verfahren zur Überwachung einer elektrochemischen Halbzelle (1, 101) zweiter Ordnung, welche mit einer Steuer- und/oder Regeleinheit (7) zur Schliessung eines elektrochemischen Kontakts zwischen der Halbzelle (1,101) und einem Messmedium (8) und mit mindestens einem Temperatursensor (9, 10) zusammenwirkt, wobei die Halbzelle (1, 101) mindestens einen Elektrolyten (4) und ein erstes mit dem Elektrolyten (4) in Kontakt stehendes Ableitelement (2) mit einem ersten Potential ($E_1$) aufweist, **dadurch gekennzeichnet, dass** die Halbzelle (1, 101) mindestens ein zweites mit dem Elektrolyten (4) in Kontakt stehendes Ableitelement (3) mit einem zweiten Potential ($E_2$) aufweist, dass beide Ableitelemente (2, 3) dasselbe Metall aufweisen, dass das erste Ableitelement (2) einen Überzug (6) aus einem schwerlöslichen Salz desselben Metalls aufweist, und dass das Verfahren die folgenden Schritte umfasst:

a. Erfassen eines Temperatur-Zeit-Profil (T(t)) mittels des Temperatursensors (9, 10);

b. Ermitteln eines ersten Kontrollwerts ($D_n$), welcher im Zusammenhang mit dem Temperatur-Zeit-Profil (T(t)) an mindestens einem Zeitpunkt ($t_n$) steht;

c. Vergleichen des ersten Kontrollwerts ($D_n$) mit einem ersten Grenzwert (K);

d. Ermitteln eines zweiten Kontrollwerts ($F_n$), welcher einen Zusammenhang zwischen dem ersten Potential ($E_1$) und dem zweiten Potential ($E_2$) an mindestens einem Zeitpunkt ($t_n$) herstellt, wenn der erste Grenzwert (K) erreicht und/oder überschritten wird;

e. Vergleich des zweiten Kontrollwerts ($F_n$) mit einem zweiten Grenzwert (G) und

f. Erzeugen eines Signals bei Erreichen und/oder Unterschreiten des zweiten Grenzwerts (G).

2. Verfahren nach Anspruch 1, **dadurch gekennzeichnet, dass** der Verfahrensschritt der Ermittlung des zweiten Kontrollwerts ($F_n$) die Messung einer zwischen dem ersten Ableitelement (2) und einer weiteren Halbzelle auftretenden ersten Spannung ($U_1$) und die Messung einer zwischen dem zweiten Ableitelement (3) und der weiteren Halbzelle auftretenden zweiten Spannung ($U_2$) umfasst.

3. Verfahren nach Anspruch 1, **dadurch gekennzeichnet, dass** der Verfahrensschritt der Ermittlung des zweiten Kontrollwerts ($F_n$) die Messung einer zwischen dem ersten Ableitelement (2) und dem zweiten Ableitelement (3) auftretenden weiteren Spannung ($U_{1,2}$) umfasst.

4. Verfahren nach einem der Ansprüche 1 bis 3, **dadurch gekennzeichnet, dass** die Temperatur (T) als Temperatur-Zeit-Profil (T(t)) kontinuierlich oder in regelmässigen oder unregelmässigen Zeitintervallen erfasst wird.

5. Verfahren nach einem der Ansprüche 1 bis 3, **dadurch gekennzeichnet, dass** die Ermittlung des ersten Kontrollwerts ($D_n$) die mathematische Ableitung der Temperatur nach der Zeit ($T$) beinhaltet.

6. Verfahren nach einem der Ansprüche 1 bis 5, **dadurch gekennzeichnet, dass** die Spannung ($U_1$, $U_2$, $U_{1,2}$) als Spannungs-Zeit-Profil ($U_1(t)$, $U_2(t)$, $U_{1,2}(t)$) kontinuierlich oder in regelmässigen oder unregelmässigen Zeitintervallen erfasst wird.

7. Verfahren nach einem der Ansprüche 1 bis 6, **dadurch gekennzeichnet, dass** die Schritte b bis f in vorgegebenen Zeitabständen oder kontinuierlich wiederholt werden.

8. Verfahren nach einem der Ansprüche 1 bis 7, **dadurch gekennzeichnet, dass** der erste Kontrollwert ($D_n$) als diskreter Wert eines Kontrollprofils (d(T, t)) an mindestens einem vorgegebenen Zeitpunkt ($t_n$) ermittelt wird.

9. Messsonde mit mindestens einer elektrochemischen Halbzelle (101) zweiter Ordnung , einer Steuer- und/oder Regeleinheit (7) zur Schliessung eines elektrochemischen Kontakts zwischen der Halbzelle (101) und einem Messmedium (8), und mit mindestens einem Temperatursensor (9, 10), wobei die Halbzelle (101) einen Elektrolyten (4) und ein mit dem Elektrolyten (4) in Kontakt stehendes erstes Ableitelement (2) mit einem ersten Potential($E_1$) aufweist, **dadurch gekennzeichnet, dass** die Halbzelle (1, 101) mindestens ein mit dem Elektrolyten (4) in Kontakt stehendes zweites Ableitelement (3) mit einem zweiten Potential ($E_2$) aufweist, dass beide Ableitelemente (2, 3) dasselbe Metall aufweisen, dass das erste Ableitelement (2) einen Überzug (6) aus einem schwerlöslichen Salz desselben Metalls aufweist, und dass die Steuer- und/oder Regeleinheit (7) ein Programm zur Durchführung eines Verfahrens zur Überwachung der elektrochemischen Halbzelle nach einem der Ansprüche 1 bis 8 aufweist.

10. Messsonde nach Anspruch 9, **dadurch gekennzeichnet, dass** das Metall Silber, Quecksilber, Thallium, Blei oder eine Legierung dieser Metalle ist.

11. Messsonde nach Anspruch 9 oder 10, **dadurch gekennzeichnet, dass** das Salz ein Metallchalkogenid, Metallhalogenid oder Metallsulfat ist.

12. Messsonde nach einem der Ansprüche 9 bis 11, **dadurch gekennzeichnet, dass** der Elektrolyt ein flüssiger Elektrolyt ist.

13. Messsonde nach einem der Ansprüche 9 bis 11, **dadurch gekennzeichnet, dass** der Elektrolyt ein verfestigter Elektrolyt ist.

14. Messsonde nach einem der Ansprüche 9 bis 13, **dadurch gekennzeichnet, dass** diese als ionensensitive, potentiometrische oder Redox-Messsonde, insbesondere als pH-Messsonde, ausgestaltet ist.

**Claims**

1. Method of monitoring an electrochemical second order half-cell (1, 101) which cooperates with a control- and/or regulation unit (7) to close an electrochemical contact between the half-cell (1, 101) and a measuring medium (8), and with at least one temperature sensor (9, 10), wherein the half-cell (1, 101) includes at least one electrolyte (4) and a first conductor element (2) that is in contact with the electrolyte (4) and holds a first electrical potential ($E_1$), **characterized in that** the half-cell (1, 101) comprises at least one second conductor element (3) which is likewise in contact with the electrolyte (4) and holds a second electrical potential ($E_2$), that the two conductor elements (2, 3) comprise the same metal, that the first conductor element (2) has a coating (6) of a low-solubility salt of the same metal, and that the method comprises the following steps:

   a. registering a temperature-time profile by means of the temperature sensor (9, 10);
   b. determining a first control value ($D_n$) which is related to the temperature-time profile for at least one point in time ($t_n$) ;
   c. comparing the first control value ($D_n$) to a first limit value (K) ;
   d. determining a second control value ($F_n$) which establishes a mathematical connection between the first potential ($E_1$) and the second potential ($E_2$) for at least one point in time ($t_n$) when the first limit value (K) is attained and/or exceeded;
   e. comparing the second control value ($F_n$) to a second limit value (G); and
   f. generating a signal when the second control value has arrived at or fallen below the second limit value (G).

2. Method according to claim 1, **characterized in that** the method step of determining the second control value ($F_n$) comprises the measurement of a first voltage ($U_1$) occurring between the first conductor element (2) and a further half-cell and the measurement of a second voltage ($U_2$) occurring between the second conductor element (3) and the further half-cell.

3. Method according to claim 1, **characterized in that** the method step of determining the second control value ($F_n$) comprises the measurement of a further voltage ($U_{1,2}$) occurring between the first conductor element (2) and the second conductor element (3).

4. Method according to one of the claims 1 to 3, **characterized in that** the temperature (T) is determined continuously or in regular or irregular time intervals as a temperature-time profile.

5. Method according to one of the claims 1 to 3, **characterized in that** the determination of the first control value ($D_n$) entails the mathematical derivative of the temperature with respect to time.

6. Method according to one of the claims 1 to 5, **characterized in that** the voltage ($U_1$, $U_2$, $U_{12}$) is determined either continuously or in regular or irregular time intervals as a voltage-time profile.

7. Method according to one of the claims 1 to 6, **characterized in that** the steps b to f are repeated in given time intervals or continuously.

8. Method according to one of the claims 1 to 7, **characterized in that** the first control value ($D_n$) is determined as a discrete value of a control profile for at least one given point in time ($t_n$) .

9. Measuring probe with at least one electrochemical second order half-cell (101), a control- and/or regulation unit (7) to close an electrochemical contact between the half-cell (101) and a measuring medium (8), and with at least one temperature sensor (9, 10), wherein the half-cell (101) includes an electrolyte (4) and a first conductor element (2) that is in contact with the electrolyte (4) and holds a first electrical potential ($E_1$), **characterized in that** the half-cell (1, 101) comprises at least one second conductor element (3) which is in contact with the electrolyte (4) and holds a second electrical potential ($E_2$), that the two conductor elements (2, 3) comprise the same metal, that the first conductor element (2) has a coating (6) of a low-solubility salt of the same metal, and that the control- and/or regulation unit (7) includes a program for executing a method of monitoring the electrochemical half-cell according to one of the claims 1 to 8.

**10.** Measuring probe according to claim 9, **characterized in that** the metal is silver, mercury, thallium, lead, or an alloy of these metals.

**11.** Measuring probe according to claim 9 or 10, **characterized in that** the salt is a metal chalcogenide, metal halogenide or metal sulfate.

**12.** Measuring probe according to one of the claims 9 to 11, **characterized in that** the electrolyte is a liquid electrolyte.

**13.** Measuring probe according to one of the claims 9 to 11, **characterized in that** the electrolyte is a solidified electrolyte.

**14.** Measuring probe according to one of the claims 9 to 13, **characterized in that** the measuring probe is configured as an ion-sensitive, potentiometric or redox measuring probe, in particular as a pH measuring probe.

**Revendications**

**1.** Procédé pour contrôler une demi-cellule (1, 101) électrochimique de second ordre, qui coopère avec une unité de commande et/ou de réglage (7) pour la fermeture d'un contact électrochimique entre la demi-cellule (1, 101) et un milieu de mesure (8) et avec au moins un capteur de température (9, 10), la demi-cellule (1, 101) comprenant au moins un électrolyte (4) et un premier élément de dérivation (2) en contact avec l'électrolyte (4) avec un premier potentiel ($E_1$), **caractérisé en ce que** la demi-cellule (1, 101) comprend au moins un second élément de dérivation (3) en contact avec l'électrolyte (4) avec un second potentiel ($E_2$), **en ce que** les deux éléments de dérivation (2, 3) comprenant le même métal, **en ce que** le premier élément de dérivation (2) comprend un revêtement (6) à base d'un sel difficilement soluble du même métal, et ce que le procédé comprend les étapes suivantes :

    a. enregistrement d'un profil température-temps ($T(t)$) au moyen du capteur de température (9, 10) ;
    b. détermination d'une première valeur de contrôle ($D_n$), qui est en rapport avec le profil température-temps ($T(t)$) à au moins un moment ($t_n$) ;
    c. comparaison de la première valeur de contrôle ($D_n$) avec une première valeur limite (K) ;
    d. détermination d'une seconde valeur de contrôle ($F_n$), qui établit un rapport entre le premier potentiel ($E_1$) et le second potentiel ($E_2$) à au moins un moment ($t_n$) lorsque la première valeur limite (K) est atteinte et/ou dépassée ;
    e. comparaison de la seconde valeur de contrôle ($F_n$) avec une seconde valeur limite (G) et
    f. génération d'un signal lorsque la seconde valeur limite (G) est atteinte et/ou n'est pas dépassée.

**2.** Procédé selon la revendication 1, **caractérisé en ce que** l'étape de procédé de la détermination de la seconde valeur de contrôle ($F_n$) comprend la mesure d'un premier voltage ($U_1$) apparaissant entre le premier élément de dérivation (2) et une autre demi-cellule et la mesure d'un second voltage ($U_2$) apparaissant entre le second élément de dérivation (3) et l'autre demi-cellule.

**3.** Procédé selon la revendication 1, **caractérisé en ce que** l'étape de procédé de la détermination de la seconde valeur de contrôle ($F_n$) comprend la mesure d'un autre voltage ($U_{1,2}$) apparaissant entre le premier élément de dérivation (2) et le second élément de dérivation (3).

**4.** Procédé selon l'une quelconque des revendications 1 à 3, **caractérisé en ce que** la température (T) est enregistrée sous forme de profil température-temps ($T(t)$) en continu ou à des intervalles de temps réguliers ou irréguliers.

**5.** Procédé selon l'une quelconque des revendications 1 à 3, **caractérisé en ce que** la détermination de la première valeur de contrôle ($D_n$) comporte la dérivation mathématique de la température en fonction du temps (T).

**6.** Procédé selon l'une quelconque des revendications 1 à 5, **caractérisé en ce que** le voltage ($U_1$, $U_2$, $U_{1,2}$) est enregistrée sous forme de profil voltage-temps ($U_1(t)$ , $U_2(t)$, $U_{1,2}(t)$) en continu ou à des intervalles réguliers ou irréguliers.

**7.** Procédé selon l'une quelconque des revendications 1 à 6, **caractérisé en ce que** les étapes b à f sont répétées à des intervalles de temps prédéfinis ou en continu.

**8.** Procédé selon l'une quelconque des revendications 1 à 7, **caractérisé en ce que** la première valeur de contrôle

($D_n$) est déterminée comme valeur discrète d'un profil de contrôle ($d(T, t)$) à au moins un moment ($t_n$) prédéfini.

9. Sonde de mesure comprenant une demi-cellule (101) électrochimique de second ordre, une unité de commande et/ou de réglage (7) pour la fermeture d'un contact électrochimique entre la demi-cellule (101) et un milieu de mesure (8), et au moins un capteur de température (9, 10), la demi-cellule (101) comprenant un électrolyte (4) et un premier élément de dérivation (2) en contact avec l'électrolyte (4) avec un premier potentiel ($E_1$), **caractérisé en ce que** la demi-cellule (1, 101) comprend au moins un second élément de dérivation (3) en contact avec l'électrolyte (4) avec un second potentiel ($E_2$), **en ce que** les deux éléments de dérivation (2, 3) comprenant le même métal, **en ce que** le premier élément de dérivation (2) comprend un revêtement (6) à base d'un sel difficilement soluble du même métal, et **en ce que** l'unité de commande et/ou de réglage (7) comprend un programme pour la mise en oeuvre d'un procédé pour le contrôle de la demi-cellule électrochimique selon l'une quelconque des revendications 1 à 8.

10. Sonde de mesure selon la revendication 9, **caractérisée en ce que** le métal est de l'argent, du mercure, du thallium, du plomb ou un alliage de ces métaux.

11. Sonde de mesure selon la revendication 9 ou 10, **caractérisée en ce que** le sel est un chalcogénure de métal, un halogénure de métal ou un sulfate de métal.

12. Sonde de mesure selon l'une quelconque des revendications 9 à 11, **caractérisée en ce que** l'électrolyte est un électrolyte liquide.

13. Sonde de mesure selon l'une quelconque des revendications 9 à 11, **caractérisée en ce que** l'électrolyte est un électrolyte consolidé.

14. Sonde de mesure selon l'une quelconque des revendications 9 à 13, **caractérisée en ce que** cette sonde est conçue sous forme de sonde de mesure sensible aux ions, potentiométrique ou sonde de mesure redox, en particulier comme sonde de mesure de pH.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1643242 A1
- US 20050040038 A1
- EP 1176419 A2
- DE 10100239 A1